Europäisches Patentamt

European Patent Office

Office européen des brevets

(19)

(11) **EP 0 573 832 B1**

(12) **FASCICULE DE BREVET EUROPEEN**

(45) Date de publication et mention
de la délivrance du brevet:
**08.09.1999 Bulletin 1999/36**

(51) Int Cl.⁶: **H02J 7/00**

(21) Numéro de dépôt: **93108258.0**

(22) Date de dépôt: **21.05.1993**

(54) **Appareil pour charger un accumulateur rechargeable**

Gerät zum Laden eines wiederaufladbaren Akkumulators

Apparatus for charging a rechargeable accumulator

(84) Etats contractants désignés:
**CH DE ES GB IT LI SE**

(30) Priorité: **01.06.1992 FR 9206691**

(43) Date de publication de la demande:
**15.12.1993 Bulletin 1993/50**

(73) Titulaire: **The Swatch Group Management
Services AG
2501 Biel (CH)**

(72) Inventeur: **Jeanneret, René
CH-3274 Merzligen (CH)**

(74) Mandataire: **de Montmollin, Henri et al
ICB
Ingénieurs Conseils en Brevets SA
Rue des Sors 7
2074 Marin (CH)**

(56) Documents cités:
WO-A-92/06525          GB-A- 1 578 922
US-A- 3 493 837        US-A- 4 021 717
US-A- 4 238 721        US-A- 4 575 670
US-A- 5 003 244

• ERICSSON REVIEW vol. 60, no. 4, 1983,
STOCKHOLM SE pages 222 - 225 HANS
ANDERSON AND SVEN BERGVIK 'Sealed
Lead-acid Batteries for small
Telecommunication Plants'
• PATENT ABSTRACTS OF JAPAN vol. 013, no.
407 (E-818) 8 September 1989 & JP-A-01 148 031
(MEIJI NATL IND CO LTD) 9 June 1989

## Description

La présente invention a pour objet un appareil pour charger un accumulateur d'énergie électrique rechargeable comportant une première pluralité d'éléments.

Pour ne pas alourdir inutilement la description qui va suivre, on utilisera simplement dans celle-ci les termes "chargeur" et "accumulateur" pour désigner respectivement un tel appareil et un tel accumulateur électrique rechargeable.

En outre, et pour la même raison, on parlera uniquement de la charge d'un tel accumulateur, même pour désigner l'opération qui est effectuée après qu'il a été utilisé un certain temps et qui est destinée à remplacer l'énergie électrique qu'il a fournie, opération qui est souvent appelée recharge de cet accumulateur.

Dans le langage courant, on désigne très souvent par le terme "capacité" d'un accumulateur ce qui est en fait sa capacité nominale, c'est-à-dire la grandeur, généralement exprimée en Ampères.heures, qui représente la quantité d'énergie électrique que cet accumulateur peut théoriquement restituer, dans des conditions données, après avoir été complètement chargé. Dans ce sens, la capacité d'un accumulateur donné a donc une valeur fixe.

Il faut noter que, dans la description qui va suivre, le terme "capacité" sera par contre utilisé pour désigner la grandeur représentant la quantité d'énergie électrique qu'un accumulateur peut restituer à un moment quelconque, cette capacité étant donc variable entre une valeur maximale, qui peut être différente de la capacité nominale de cet accumulateur, et une valeur nulle qui sont respectivement celles qu'elle a lorsque l'accumulateur est complètement chargé et complètement déchargé.

La charge d'un accumulateur peut être réalisée selon diverses méthodes qui sont bien connues et qui ne seront pas toutes décrites ici.

Selon l'une de ces méthodes, qui est très souvent utilisée, cette charge est réalisée en deux étapes distinctes consécutives.

Pendant la première de ces étapes, le chargeur fournit à l'accumulateur un courant la ayant une intensité constante I1 qui est choisie en fonction de la capacité nominale de cet accumulateur et du temps maximal admissible pour le charger complètement après qu'il a été déchargé. Ainsi, par exemple, si l'on admet que la charge d'un accumulateur ayant une capacité nominale de 200 Ampères.heures peut durer 10 heures, on choisira pour l'intensité I1 une valeur de 20 Ampères. Cette intensité I1 ne doit cependant en aucun cas dépasser une valeur maximale fixée par le fabricant de l'accumulateur sous peine d'endommager ce dernier.

Cette première étape, pendant laquelle la tension Ua aux bornes de l'accumulateur augmente régulièrement, se termine au moment où cette tension Ua atteint une valeur U1, qui est également fixée par le fabricant de l'accumulateur.

La charge de l'accumulateur, qui n'est pas encore complète à la fin de cette première étape, se termine au cours de la deuxième étape, pendant laquelle le chargeur maintient la tension Ua aux bornes de cet accumulateur à cette valeur U1.

Le courant la diminue alors, jusqu'à devenir très faible lorsque la capacité de l'accumulateur a atteint sa valeur maximale.

Un chargeur mettant en oeuvre cette méthode peut être constitué par une source agencée de manière à fournir un courant constant ayant l'intensité I1 mentionnée ci-dessus tant que la tension à ses bornes est inférieure à la valeur U1 également mentionnée ci-dessus, et de manière que cette tension à ses bornes ne dépasse pas cette valeur U1.

Selon une autre méthode, également souvent utilisée, la charge de l'accumulateur est réalisé en une seule étape, en fournissant à l'accumulateur un courant la dont l'intensité diminue au fur et à mesure de l'augmentation de la capacité de cet accumulateur et devient très faible lorsque cette capacité atteint sa valeur maximale, la tension Ua aux bornes de cet accumulateur augmentant dans le même temps jusqu'à la valeur U1 mentionnée ci-dessus.

Un chargeur mettant en oeuvre cette méthode peut être constitué par une source de tension agencée de manière à fournir une tension à vide ayant la valeur U1 et ayant une résistance interne telle que l'intensité du courant maximal qu'elle peut fournir a la valeur I1.

Il faut noter que la tension Ua aux bornes d'un accumulateur ne doit pas dépasser cette valeur U1 sous peine de risquer d'endommager cet accumulateur et donc de diminuer sa durée de vie. Or cette valeur U1 dépend assez nettement de la température de l'accumulateur pendant sa charge.

Les chargeurs connus comportent donc souvent des moyens pour ajuster cette valeur U1 en fonction de la température de l'accumulateur, ces moyens pouvant être simplement manuels ou être automatiques, auquel cas ils comportent évidemment un ou plusieurs capteurs de mesure de la température disposés dans l'accumulateur.

Dans les chargeurs connus les plus simples, la valeur U1 est fixe, ce qui a comme conséquence que, selon la température, l'accumulateur ne se charge pas complètement, ou risque d'être endommagé.

Il est bien connu que les divers éléments d'un accumulateur n'ont pratiquement jamais tous la même capacité maximale, ou, en d'autres termes que la quantité maximale d'énergie électrique que chacun de ces éléments peut emmagasiner lors de la charge de l'accumulateur et restituer ensuite n'est pratiquement jamais la même. Ceci est dû au fait qu'il n'est pratiquement pas possible de fabriquer ces éléments de manière que les divers paramètres qui déterminent leur capacité maximale, par exemple le volume et/ou la composition chimique de la matière active qu'ils comprennent, soient rigoureusement identiques d'un élément à l'autre. En outre, certains de ces paramètres peuvent varier au cours du temps et/ou avec la température.

Il est également bien connu qu'il n'est pas souhaitable de continuer à faire passer un courant important dans un élément d'un accumulateur lorsque cet élément est complètement chargé, c'est-à-dire lorsque sa capacité a atteint sa valeur maximale, car ce courant provoque alors des phénomènes chimiques et/ou physiques qui peuvent endommager cet élément. La gravité des dégâts subis par cet élément dans un tel cas augmente avec l'intensité du courant qui le traverse, et ces dégâts ont notamment pour effet de diminuer encore plus sa capacité maximale.

Or, lorsqu'un accumulateur est chargé à l'aide d'un chargeur connu, et quelle que soit la méthode de charge mise en oeuvre par ce dispositif, tous les éléments de cet accumulateur sont évidemment traversés par le même courant. Il en résulte que celui des éléments de cet accumulateur dont la capacité maximale est la plus faible atteint cette capacité maximale à un moment où les autres éléments n'ont pas encore atteint leur propre capacité maximale. Comme ils n'est généralement pas possible de déterminer ce moment, le courant de charge de l'accumulateur continue à traverser l'élément ayant la capacité maximale la plus faible après que ce dernier a atteint cette capacité maximale. Cet élément risque fort d'être alors endommagé par ce courant. Comme en outre les dégâts probablement subis par cet élément ont notamment comme conséquence une diminution de sa capacité maximale, cet élément se dégrade un peu plus à chaque nouvelle charge de l'accumulateur et finit par être complètement détruit, ce qui rend tout l'accumulateur inutilisable.

Ces inconvénients sont d'autant plus graves que le nombre d'éléments d'un accumulateur est plus grand.

Prenons par exemple le cas d'un accumulateur au plomb chargé par un chargeur mettant en oeuvre la première méthode décrite ci-dessus.

Pour un tel accumulateur, la valeur U1 définie ci-dessus est par exemple fixée à 2,5 Volts par élément. Si cet accumulateur comporte soixante éléments, cette valeur U1 sera donc

$$U1 = 60 \cdot 2,5 \text{ Volts} = 150 \text{ Volts}$$

Admettons en outre que l'un de ces soixante éléments, qui sera appelé élément Ex pour le distinguer des cinquante-neuf autres éléments, a une capacité maximale plus faible que chacune des capacités maximales de ces autres éléments, et que ces dernières capacités maximales sont toutes égales.

Au cours de la première étape de la charge de cet accumulateur, la tension aux bornes de l'élément Ex atteint évidemment la valeur de 2,5 Volts avant la tension aux bornes de chacun des autres éléments, à un instant qui sera appelé instant t1.

Admettons encore que, à cet instant t1, la tension aux bornes de chacun des cinquante-neuf éléments autres que l'élément Ex n'a qu'une valeur de, par exemple, 2,3 Volts.

La tension Ua aux bornes de l'accumulateur n'est donc, à cet instant t1, que :

$$Ua = 59 \cdot 2,3 \text{ Volts} + 2,5 \text{ Volts} = 138,2 \text{ Volts}$$

Le chargeur n'interrompt donc pas la première étape de la charge de l'accumulateur, et l'intensité du courant qui continue à traverser les éléments de l'accumulateur, y compris bien entendu l'élément Ex, reste constante. La tension aux bornes de chacun de ces éléments continue à augmenter, la tension aux bornes de l'élément Ex se stabilisant assez rapidement, lorsque la capacité de cet élément Ex a atteint sa valeur maximale, à une valeur de, par exemple, 2,7 Volts.

Lorsque la tension Ua aux bornes de l'accumulateur atteint la valeur de 150 Volts mentionnée ci-dessus, à un instant qui sera appelé instant t2, et que le chargeur interrompt la première étape de la charge de cet accumulateur, la tension aux bornes de chacun des cinquante-neuf éléments autres que l'élément Ex est donc égale à :

$$\frac{150 \text{ Volts - 2,7 Volts}}{59} = 2,497 \text{ Volts}$$

On sait que lorsqu'un accumulateur au plomb est chargé par un courant constant, comme dans le présent exemple, la vitesse de l'augmentation de la tension aux bornes de chacun de ses éléments n'est pas constante en fonction du temps, mais qu'elle diminue lorsque cette tension augmente jusqu'à devenir assez faible lorsque cette tension s'approche de la valeur de 2,5 Volts. On conçoit donc qu'il s'écoule un temps assez long entre l'instant t1, où la tension aux bornes de tous les éléments de l'accumulateur, à l'exception de l'élément Ex, est égale à 2,3 Volts, et l'instant t2, où cette tension est presque égale à 2,5 Volts.

Il y a donc un grand risque que l'élément Ex soit endommagé par le courant important qui continue à le traverser pendant un temps assez long après que sa capacité a atteint sa valeur maximale.

En pratique, du fait que les capacités maximales des divers éléments de l'accumulateur ne sont pas toutes égales entre elles, ce n'est pas seulement un élément qui risque d'être endommagé, mais tous ceux dont la capacité maximale est relativement faible et dont la tension atteint la valeur de 2,5 Volts avant la fin de la première étape de la charge de l'accumulateur.

On mentionnera que le brevet US-A-5,003,244 décrit un appareil pour charger un accumulateur d'énergie électrique rechargeable comprenant une pluralité de groupes d'éléments. Cet appareil comporte une source produisant une première tension alternative, et un circuit de charge relié à la source et destiné à charger la pluralité de groupes d'éléments. Ce circuit de charge comporte une pluralité de redresseurs ayant chacun des sorties reliées à l'un des groupes d'éléments et un transformateur comprenant un primaire relié à la source, et une pluralité de secondaires reliés chacun à un redresseur respectif.

Un exemple similaire d'un tel appareil est en outre décrit dans le brevet US-A-4,575, 670. L'appareil décrit dans ce brevet comporte dans cet exemple trois circuits de charge distincts connectés en parallèle sur la source. Ces circuits de charge comportent chacun un transformateur comprenant un primaire et trois secondaires respectivement reliés à trois redresseurs. Ces redresseurs sont interconnectés en série et ont chacun une sortie reliée à l'un des groupes d'éléments de l'accumulateur.

Dans les deux exemples suscités, on constatera, du fait que le transformateur ne comporte qu'un seul primaire et une pluralité de secondaires, le couplage magnétique entre l'un quelconque des secondaires et le primaire diffère de celui des autres secondaires. On constatera en outre que les divers secondaires sont couplés magnétiquement les uns aux autres.

Il découle de ce qui précède que les tensions produites par ces secondaires ne sont pas toutes égales entre elles, et ceci d'autant plus que les courants absorbés par les divers groupes d'éléments de l'accumulateur ne sont évidemment jamais tous égaux entre eux.

Les appareils décrits dans les brevets suscités ne permettent donc pas de charger complètement et en toute sécurité tous les groupes d'éléments d'un accumulateur.

Un but de la présente invention est ainsi de proposer un appareil pour charger un accumulateur qui diminue sensiblement le risque d'endommager cet accumulateur pendant sa charge si l'un ou l'autre de ses éléments a une capacité maximale inférieure à celle de ses autres éléments, ou même qui supprime complétement ce risque.

Ce but est atteint par l'appareil tel que revendiqué à la revendication 1.

D'autres buts et avantages de la présente invention seront rendus évidents par la description qui va suivre et qui sera faite à l'aide du dessin annexé dans lequel :

- la figure 1 est un schéma général du chargeur selon l'invention ; et
- les figures 2 et 3 sont des schémas plus détaillés de deux formes d'exécution du chargeur selon l'invention.

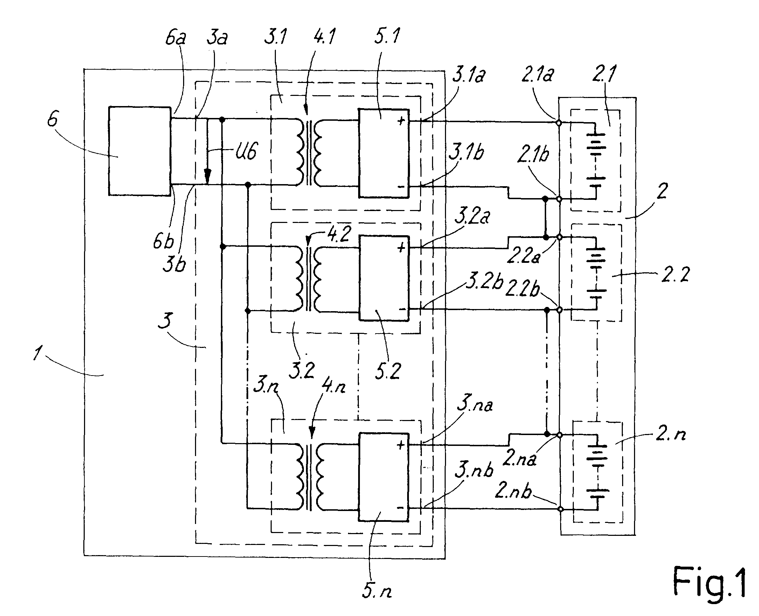

Le chargeur selon l'invention représenté schématiquement et à titre d'exemple non limitatif à la figure 1 avec la référence 1 est destiné à charger un accumulateur également représenté à la figure 1 avec la référence 2.

Pour une raison qui sera rendue évidente par la suite de cette description, les éléments de l'accumulateur 2 sont répartis en n groupes d'éléments, désignés par les références 2.1 à 2.n et comportant tous, dans le présent exemple, le même nombre d'éléments.

Seuls les deux premiers, 2.1 et 2.2, et le dernier, 2.n, de ces groupes d'éléments ont été représentés dans la figure 1.

Tous les éléments d'un même groupe sont évidemment connectés en série les uns avec les autres.

Chaque groupe d'éléments 2.1 à 2.n comporte une première borne, accessible depuis l'extérieur de l'accumulateur 2, reliée à la borne positive de son premier élément et une deuxième borne, également accessible depuis l'extérieur de l'accumulateur 2, reliée à la borne négative de son dernier élément. Chaque première et chaque deuxième borne constitue évidemment la borne positive et, respectivement, la borne négative du groupe dont elles font partie, et elles sont désignées par la même référence que ce groupe, suivie de la lettre a et, respectivement, de la lettre b.

La borne positive 2.1a du premier groupe d'éléments 2.1 et la borne négative 2.nb du dernier groupe d'éléments 2.n constituent évidemment la borne positive et, respectivement, la borne négative de l'accumulateur 2.

La borne négative de chaque groupe d'éléments, à l'exception bien sûr de celle du dernier groupe 2.n, est reliée à la borne positive du groupe d'éléments suivant, de sorte que tous les éléments de l'accumulateur 2 sont reliés en série les uns avec les autres entre la borne positive 2.1a et la borne 2.nb de cet accumulateur 2.

Le chargeur 1 comporte une pluralité de circuits de charge distincts les uns des autres désignés, ensemble, par la référence 3 et destinés, chacun, à charger un des groupes d'éléments 2.1 à 2.n de l'accumulateur 2. Ces circuits de charge sont respectivement désignés par les références 3.1 à 3.n, le deuxième chiffre de la référence de chaque circuit de charge étant identique à celui de la référence du groupe d'éléments de l'accumulateur 2 qu'il est destiné à charger.

Chaque circuit de charge 3.1 à 3.n comporte un transformateur et un circuit redresseur relié à l'enroulement secondaire de ce transformateur. Ces transformateurs et ces circuits redresseurs sont respectivement désignés par les références 4.1 à 4.n et 5.1 à 5.n, le deuxième chiffre de la référence de chacun de ces transformateurs et de chacun de ces redresseurs étant identique à celui de la référence du circuit de charge dont ils font partie.

Les enroulements primaires des transformateurs 4.1 à 4.n sont tous reliés en parallèle à des entrées 3a et 3b communes à tous les circuits de charge 3.1 à 3.n, qui sont elles-mêmes reliées aux sorties 6a et 6b d'une source 6 produisant une tension alternative U6.

Les circuits redresseurs 5.1 à 5.n ne seront pas décrits en détail car ils peuvent être du même type que n'importe lequel des nombreux circuits redresseurs bien connus des spécialistes. On mentionnera simplement que, pour certains types de circuits redresseurs, il est nécessaire de prévoir une prise médiane à l'enroulement secondaire du transformateur auquel ils sont reliés. Un tel cas n'a pas été représenté.

La sortie positive de chaque redresseur 5.1 à 5.n, qui est repérée par le signe +, constitue la sortie positive du circuit de charge dont ce redresseur fait partie, et cette dernière sortie est désignée par la même référence que ce circuit de charge, suivie de la lettre a. De même, la sortie négative de chaque redresseur 5.1 à 5.n, qui est repérée par le signe -, constitue la sortie négative du circuit de charge dont ce redresseur fait partie, et cette dernière sortie est désignée par la même référence que ce circuit de charge, suivie de la lettre b.

Chaque circuit de charge 3.1 à 3.n étant destiné à charger un des groupes d'éléments 2.1 à 2.n de l'accumulateur 2 comme cela a été mentionné ci-dessus, chacune des sorties 3.1a à 3.na et chacune des sorties 3.1b à 3.nb de ces circuits de charge 3.1 à 3.n est évidemment reliée à la borne de cet accumulateur 2 dont la référence comporte le même deuxième chiffre et la même lettre.

Il faut noter que, dans certains cas, les groupes d'éléments qui forment l'accumulateur 2 sont reliés en série les uns avec les autres par des connexions internes. Chacune de ces connexions est alors évidemment reliée à une seule borne accessible de l'extérieur de cet accumulateur. En d'autres termes, la borne négative de chaque groupe d'éléments, à l'exception du dernier, et la borne positive de l'élément suivant, qui sont séparées dans l'exemple de la figure 1, ne forment plus qu'une seule et même borne commune à ces deux groupes d'éléments.

Dans un tel cas, qui n'a pas été représenté, la borne négative de chaque circuit de charge 3.1 à 3.n, à l'exception de celle du dernier de ces circuits, et la borne positive du circuit de charge suivant sont évidemment toutes deux reliées à la borne de l'accumulateur qui est commune aux deux groupes d'éléments que ces deux circuits doivent respectivement charger.

Cette liaison peut être réalisée par deux conducteurs séparés, ou par un conducteur unique, la borne négative de chaque circuit de charge 3.1 à 3.n, à l'exception de celle du dernier, étant alors reliée à la borne positive du circuit de charge suivant à l'intérieur du chargeur 1.

Il faut également noter que les diverses liaisons entre le chargeur 1 et l'accumulateur 2 peuvent être fixes lorsque ce chargeur 1 et cet accumulateur 2 sont disposés en permanence à proximité l'un de l'autre, par exemple dans une installation fixe, non mobile, ou lorsqu'ils sont montés tous deux dans un véhicule. Ces diverses liaisons peuvent également être amovibles lorsque, par exemple, le chargeur 1 est fixe et destiné à charger des accumulateurs faisant partie de dispositifs mobiles tels que, par exemple, des véhicules.

Il faut également noter que la source de tension alternative 6 peut ne pas exister, les primaires des transformateurs 4.1 à 4.n étant alors tous reliés, de façon fixe ou amovible selon les cas, à un réseau d'alimentation en énergie électrique, par exemple le réseau public. Cependant, la fréquence de la tension alternative fournie par un tel réseau étant généralement assez basse, par exemple 50 Hz ou 60 Hz, le volume des transformateurs 4.1 à 4.n doit alors être assez grand. C'est pourquoi il est souvent avantageux de réaliser la source 6 sous la forme d'un générateur produisant une tension alternative ayant une fréquence relativement haute, de l'ordre de 10 à 20 kHz ou même supérieure à cette dernière valeur. On sait en effet que c'est pour une fréquence de cet ordre de grandeur que le volume d'un transformateur destiné à transmettre une puissance électrique donnée est le plus faible, et que son prix est donc le plus bas. Un exemple d'une telle source sera décrit plus loin.

Le chargeur 1 de la figure 1 peut être agencé de manière à mettre en oeuvre n'importe laquelle des méthodes connues pour charger les groupes d'éléments 2.1 à 2.n de l'accumulateur 2.

Ainsi, par exemple, pour que le chargeur 1 mette en oeuvre la deuxième méthode de charge décrite ci-dessus, il suffit de dimensionner les transformateurs 4.1 à 4.n et les redresseurs 5.1 à 5.n, ainsi que, le cas échéant, la source 6, de manière que la tension à vide fournie par chacun des circuits de charge 3.1 à 3.n ait une valeur sensiblement égale à U1/n, où U1 est la valeur spécifiée par le fabricant de l'accumulateur 2 et mentionnée ci-dessus et n le nombre des groupes d'éléments 2.1 à 2.n, et de manière que le courant maximal que peut fournir chacun de ces circuits de charge 3.1 à 3.n soit égal au courant maximal que l'on désire fournir à l'accumulateur 2 au début de sa charge, qui est choisi en fonction de la capacité maximale de cet accumulateur 2 et du temps admissible pour cette charge.

Lorsque le chargeur 1 est agencé de cette manière, l'intensité du courant absorbé par chacun des groupes d'éléments 2.1 à 2.n et la tension à ses bornes ont, au début de la charge de l'accumulateur 2, des valeurs qui dépendent de la capacité de ce groupe d'éléments à ce moment, cette intensité étant d'autant plus grande et cette tension étant d'autant plus basse que cette capacité est plus faible. Au fur et à mesure de l'augmentation de cette capacité, le courant de charge de ce groupe d'éléments diminue et la tension à ses bornes augmente jusqu'à la valeur U1/n, et ceci indépendamment de la capacité des autres groupes d'éléments.

Reprenons l'exemple d'un accumulateur au plomb comportant soixante éléments, que l'on désire charger selon la première méthode décrite ci-dessus. Pour pouvoir charger cet accumulateur à l'aide d'un chargeur tel que le chargeur 1 de la figure 1, ses soixante éléments sont répartis en dix groupes de six éléments chacun. La valeur U1/n mentionnée ci-dessus est donc

égale à

$$150 \text{ Volts}/10 = 15 \text{ Volts}$$

Admettons en outre que, dans un de ces dix groupes, qui sera appelé groupe G, l'un des six éléments, qui sera aussi appelé élément Ex pour le distinguer des cinq autres éléments du groupe G, a une capacité maximale plus faible que chacune des capacités maximales de ces autres éléments, et que ces dernières capacités maximales sont toutes égales.

La première étape de la charge du groupe G se déroule d'une manière analogue à celle qui a été décrite dans l'exemple ci-dessus mais, dans le présent exemple, lorsque la tension aux bornes de l'élément Ex atteint la valeur de 2,5 Volts à un instant qui sera aussi appelé t1, la tension Ug aux bornes du groupe G n'est que :

$$Ug = 5 \cdot 2,3 \text{ Volts} + 2,5 \text{ Volts} = 14 \text{ Volts}$$

En outre, lorsque la tension Ug atteint la valeur de 15 Volts mentionnée ci-dessus, à un instant qui sera aussi appelé t2, la tension aux bornes de l'élément Ex ayant atteint préalablement la valeur de 2,7 Volts comme dans l'exemple précédent, la tension aux bornes de chacun des cinq éléments autres que l'élément Ex n'est que

$$\frac{15 \text{ Volts} - 2,7 \text{ Volts}}{5} = 2,46 \text{ Volts}$$

Comme on l'a rappelé ci-dessus, la vitesse de croissance de la tension aux bornes d'un élément est assez grande lorsque cette tension est relativement faible et diminue très nettement lorsque cette tension s'approche de 2,5 Volts.

On conçoit donc que le temps qui sépare les instants t1 et t2 dans le présent exemple est nettement plus court que dans l'exemple décrit ci-dessus où l'accumulateur est chargé par un chargeur connu.

Il en découle que lorsqu'un accumulateur est chargé par un chargeur selon l'invention, le risque d'endommager un de ses éléments ayant une capacité plus faible que celle des autres et la gravité des dégâts éventuellement subis par cet élément sont beaucoup plus réduits que lorsque cet accumulateur est chargé par un chargeur connu, ce qui augmente notablement sa durée de vie. Cet avantage du chargeur selon l'invention par rapport aux chargeurs connus est dû au fait qu'il comporte des circuits de charge distincts les uns des autres et destinés, chacun, à charger un groupe d'éléments de l'accumulateur.

Dans les cas où il est important que la durée de vie de l'accumulateur soit la plus grande possible, le chargeur selon la présente invention peut être agencé de manière qu'il comporte autant de circuits de charge qu'il y a d'éléments dans l'accumulateur, les groupes d'éléments mentionnés ci-dessus ne comprenant alors évidemment chacun qu'un seul élément. Un tel cas n'a pas été représenté.

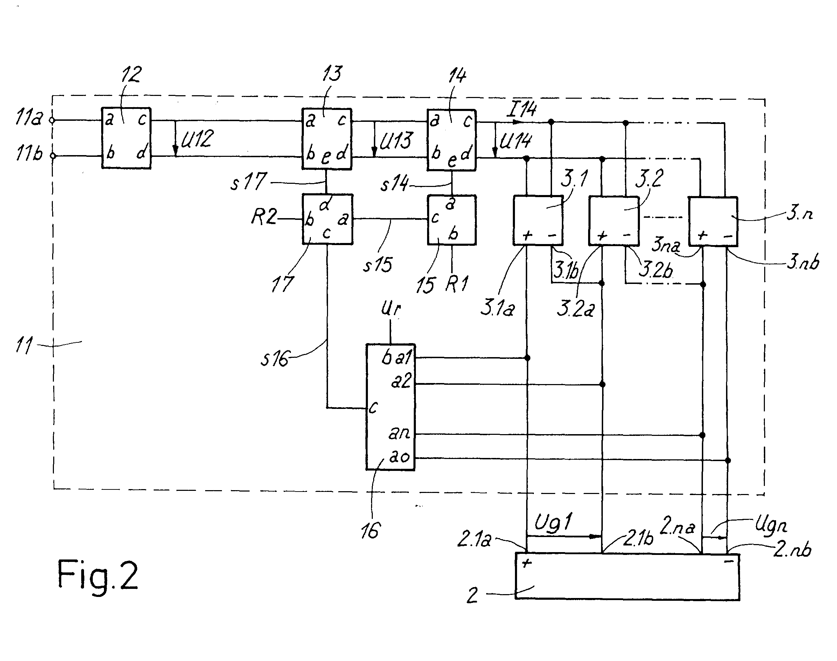

Dans sa forme d'exécution représentée à la figure 2, le chargeur selon la présente invention est désigné par la référence 11.

Comme le chargeur 1 de la figure 1, le chargeur 11 est destiné à charger un accumulateur, également désigné par la référence 2, dont les éléments sont aussi répartis en n groupes. Bien que ces groupes d'éléments n'aient pas été représentés séparément dans cette figure 2, ils seront désignés, dans la suite de cette description, par les mêmes références que celles qu'ils portent dans la figure 1, c'est-à-dire 2.1 à 2.n.

Comme cela sera rendu évident par la suite de cette description, l'accumulateur 2 n'est pas forcément relié en permanence au chargeur 11.

Toujours comme le chargeur 1 de la figure 1, le chargeur 11 comporte des circuits de charge distincts les uns des autres et destinés chacun à charger un des groupes d'éléments de l'accumulateur 2. Ces circuits de charge, qui sont désignés par les mêmes références 3.1 à 3.n que ceux du chargeur 1 de la figure 1, peuvent être identiques à ces derniers et ne seront donc pas décrits à nouveau ici. Il en est de même de leurs liaisons avec les bornes des divers groupes d'éléments de l'accumulateur 2.

Le chargeur 11 comporte deux bornes d'entrée 11a et 11b destinées à être reliées à un réseau de distribution d'énergie électrique, par exemple le réseau public, fournissant une tension alternative, et un redresseur 12 ayant deux entrées 12a et 12b reliées respectivement à ces bornes 11a et 11b. Dans cet exemple, le réseau auquel le redresseur 12 peut être relié par l'intermédiaire des bornes 11a et 11b est un réseau monophasé et ce redresseur 12 est agencé en conséquence. Mais il est évident que ce réseau peut être un réseau multiphasé, par exemple triphasé, auquel cas le redresseur 12 est agencé en conséquence et le nombre de bornes d'entrée du chargeur 11 est adapté au nombre de conducteurs de ce réseau.

Le redresseur 12 ne sera pas décrit en détail, car il peut être semblable à n'importe lequel des nombreux redresseurs qui sont bien connus des spécialistes. On notera simplement qu'il fournit entre sa sortie positive 12c et sa sortie négative 12d une tension redressée U12 dont le taux d'ondulation dépend de sa structure et de la présence éventuelle d'un filtre passe-bas.

Les sorties 12c et 12d du redresseur 12 sont reliées aux entrées 13a et 13b d'un régulateur de tension 13. Ce régulateur 13 est agencé de manière à produire entre ses sorties 13c et 13d, à partir de la tension appliquée entre ses entrées 13a et 13b, une tension continue stabilisée U13 dont la valeur dépend de la valeur d'un signal de réglage qu'il reçoit sur une entrée de commande 13e. Ce signal de réglage sera décrit plus loin.

Les sorties 13c et 13d du régulateur 13 sont reliées aux entrées 14a et 14b d'un convertisseur 14, qui est agencé de manière à fournir à ses sorties 14c et 14d une tension alternative U14 dont la valeur dépend directement de celle de la tension U13.

Les entrées de tous les circuits de charge 3.1 à 3.n sont reliées en parallèle aux sorties 14c et 14d du convertisseur 14.

Le convertisseur 14 comporte encore une sortie 14e, et il est agencé de manière à produire sur cette sortie 14e un signal de mesure S14 représentatif de l'intensité du courant I14 qu'il fournit aux circuits de charge 3.1 à 3.n.

Le chargeur 11 comporte encore un intégrateur 15 ayant deux entrées 15a et 15b reliées respectivement à la sortie 14e du convertisseur 14 et à la sortie d'une source, non représentée, fournissant un signal de référence R1 dont la valeur et le rôle seront décrits plus loin.

L'intégrateur 15 comporte également une sortie 15c, et il est agencé de manière à fournir à cette sortie 15c un signal S15 ayant une valeur égale à l'intégrale en fonction du temps de la différence entre les signaux R1 et S14. En d'autres termes, la valeur du signal S15 est donnée par l'équation

$$S15 = \int (R1-S14)dt$$

Le chargeur 11 comporte également un comparateur 16 ayant des entrées 16a1 à 16an respectivement reliées aux sorties positives 3.1a à 3.1n des circuits de charge 3.1 à 3.n, et donc aux bornes positives 2.1a à 2.na des groupes d'éléments 2.1 à 2.n de l'accumulateur 2 lorsque ce dernier est relié au chargeur 11. Le comparateur 16 comporte encore une entrée 16ao reliée à la sortie négative 3.nb du circuit de charge 3.n et donc à la borne négative 2.nb du dernier groupe d'éléments, 2.n, de l'accumulateur 2, toujours lorsque ce dernier est relié au chargeur 11. Ce comparateur 16 comporte encore une entrée 16b qui reçoit d'une source non représentée une tension de référence Ur dont la valeur et le rôle seront décrits plus loin.

Le comparateur 16 comporte en outre une sortie 16c, et il est agencé de manière que le signal S16 fourni par cette sortie 16c a un premier état tant que toutes les différences de tension entre deux de ses entrées 16a1 à 16ao adjacentes sont inférieures à la tension Ur, et de manière que ce signal S16 a un deuxième état si l'une quelconque de ces différences de tension est supérieure à cette tension Ur.

En d'autres termes, le comparateur 16 est agencé de manière que, lorsque l'accumulateur 2 est relié au chargeur 11, le signal S16 a son premier état tant que la tension aux bornes de chacun des groupes d'éléments 2.1 à 2.n de cet accumulateur 2 est inférieure à la tension Ur, et que ce signal S16 a son deuxième état si la tension aux bornes de l'un quelconque de ces groupes d'éléments 2.1 à 2.n est supérieure à cette tension Ur.

Le chargeur 11 comporte aussi un commutateur 17 ayant une première entrée 17a et une deuxième entrée 17b reliées respectivement à la sortie 15c de l'intégrateur 15 et à une source, non représentée, fournissant un signal de référence R2 dont la valeur et le rôle seront décrits plus loin.

Le commutateur 17 comporte encore une entrée de commande 17c qui est reliée à la sortie 16c du comparateur 16, et une sortie 17d reliée à l'entrée de commande 13e du régulateur 13. Il est agencé de manière que le signal S17 qu'il produit à sa sortie 17c, qui est le signal de réglage de la valeur de la tension U13 mentionné ci-dessus, est identique au signal S15 ou au signal R2 selon que le signal S16 est dans son premier ou son deuxième état.

Les circuits 12 à 17 qui viennent d'être décrits jouent, ensemble, le rôle de la source 6 du chargeur 1 de la figure 1 et, comme cela sera décrit en détail plus loin, cette source est agencée de manière que le chargeur 11 charge l'accumulateur 2 en mettant en oeuvre une méthode très semblable à la première méthode mentionnée ci-dessus.

Dans la première des étapes de cette méthode, le chargeur 11 fournit aux divers groupes d'éléments 2.1 à 2.n de l'accumulateur 2 des courants, qui seront respectivement appelés courants Ia1 à Ian dans la suite de cette description, ayant tous une valeur sensiblement constante et égale à la valeur I1 mentionnée ci-dessus et choisie de la même manière que si cet accumulateur 2 devait être chargé à l'aide d'un chargeur connu. Dans cette première étape, les tensions aux bornes des divers groupes d'éléments 2.1 à 2.n, qui seront respectivement appelées tensions Ug1 à Ugn, augmentent indépendamment les unes des autres, au fur et à mesure de l'augmentation de la capacité de ces groupes d'éléments 2.1 à 2.n.

Cette première étape se termine au moment où l'une quelconque de ces tensions Ug1 à Ugn devient supérieure à une valeur prédéterminée qui est égale à U1/n, c'est-à-dire au quotient de la valeur U1 définie ci-dessus par le nombre n d'éléments de l'accumulateur 2.

Pendant la deuxième étape de la charge de l'accumulateur 2, qui commence à ce même moment, le chargeur 11 applique à chacun des groupes d'éléments 2.1 à 2.n une tension sensiblement constante et égale à cette valeur U1/n.

On voit que le chargeur 11 permet aussi de charger tous les groupes d'éléments de l'accumulateur 2 jusqu'à leur capacité maximale sans risquer d'endommager un élément, ou plusieurs, ayant une capacité maximale plus faible que celle des autres éléments.

Lorsque le chargeur 11 fonctionne et que, pendant la première étape de la charge de l'accumulateur 2, il doit fournir à chacun des groupes d'éléments 2.1 à 2.n un courant ayant une intensité sensiblement constante et égale à la valeur I1 mentionnée ci-dessus, le convertisseur 14 doit évidemment fournir un courant I14 ayant une intensité constante et égale à k1.n.I1, où n est le nombre des groupes d'éléments 2.1 à 2.n, et k1 est un facteur constant qui dépend des caractéristiques du transformateur et du redresseur que comporte chacun des circuits de charge 3.1 à 3.n.

Pour une raison qui sera rendue évidente par la suite de cette description, le signal R1 appliqué à l'entrée 15b de l'intégrateur 15 est choisi de manière que sa valeur soit égale à celle que le signal S14 prend lorsque le courant I14 a la valeur k1.n.I1 mentionnée ci-dessus.

Pendant la deuxième étape de la charge de l'accumulateur 2, les tensions Ug1 à Ugn doivent toutes être maintenues à une valeur sensiblement constante et égale à U1/n. La tension U14 fournie par le convertisseur 14 doit alors évidemment avoir une valeur égale à k2.U1/n, où k2 est un autre facteur constant qui dépend également des caractéristiques du transformateur et du redresseur que comporte chacun des circuits de charge 3.1 à 3.n.

Pour que cette tension U14 ait cette valeur, il faut évidemment que la tension U13 fournie par le régulateur de tension 13 ait une valeur égale à k3.U14, où k3 est un autre facteur constant qui dépend des caractéristiques du convertisseur 14, et que le signal S17 ait donc également une valeur constante et bien déterminée.

Pour une raison qui sera également rendue évidente par la suite de cette description, le signal R2 appliqué à l'entrée 17b du commutateur 17 est choisi de manière que sa valeur soit égale à celle que doit avoir le signal S17 pour que les tensions U13 et U14 aient les valeurs mentionnées ci-dessus, et que la tension appliquée à chacun des groupes d'éléments 2.1 à 2.n ait donc la valeur U1/n.

Toujours pour une raison qui sera rendue évidente par la suite de cette description, la valeur de la tension de référence Ur appliquée à l'entrée 16b du comparateur 16 est égale à cette même valeur U1/n.

Lorsque toutes les tensions Ug1 à Ugn sont inférieures à la tension Ur, le signal S16 est dans son premier état, et le commutateur 17 est donc dans l'état où le signal S17 est identique au signal S15.

La tension U13 produite par le régulateur 13 à partir de la tension redressée U12 fournie par le redresseur 12 a donc une valeur qui dépend de celle de ce signal S15.

Dans ces conditions, l'intensité du courant I14 est automatiquement réglée à la valeur k1.n.I1 mentionnée ci-dessus.

En effet, si l'intensité du courant I14 est égale à k1.n.I1, le signal S14 est égal au signal R1 comme cela a été mentionné ci-dessus. Le signal S15, qui est égal à l'intégrale en fonction du temps de la différence de ces signaux R1 et S14, est donc constant, de même que le signal S17. Les tensions U13 et U14 sont donc également constantes, et cette dernière a justement la valeur pour laquelle l'intensité du courant I14 est égale à k1.n.I1.

Si maintenant l'intensité du courant I14 diminue au-dessous de cette valeur, par exemple par suite d'une augmentation de la résistance interne d'un ou de plusieurs des groupes d'éléments 2.1 à 2.n de l'accumulateur 2, le signal S14 diminue également, et la différence entre le signal R1 et ce signal S14 devient positive. Le signal S15 augmente alors, ce qui a pour effet de provoquer également une augmentation de la tension U13 et, par conséquent, de la tension U14, jusqu'à ce que cette tension U14 atteigne la valeur pour laquelle l'intensité du courant I14 redevient égale à la valeur k1.n.I1. A ce moment, la différence entre les signaux R1 et S14 redevient nulle, et le signal S15 redevient constant, de même que les tensions U13 et U14, cette dernière ayant alors justement la valeur pour laquelle l'intensité du courant I14 a à nouveau cette valeur k1.n.I1.

Un réglage analogue de l'intensité du courant I14 se produit évidemment si, pour une raison quelconque, cette intensité devient supérieure à cette valeur k1.n.I1.

Les intensités des courants fournis par le chargeur 11 aux divers groupes d'éléments 2.1 à 2.n pendant cette première étape de la charge de l'accumulateur 2 ne sont pas toutes exactement égales à la valeur I1, surtout au début de cette charge, car elles dépendent évidemment des résistances internes de ces groupes d'éléments 2.1 à 2.n, qui peuvent être différentes les unes des autres. Seule la somme de ces intensités est constante et égale à n.I1.

Mais ces intensités ont tendance à se rapprocher de cette valeur I1, car les groupes d'éléments ayant les résistances internes les plus faibles absorbent plus de courant que les autres et se chargent plus rapidement que ces derniers.

Leur résistance interne augmente donc également plus rapidement et, après un certain temps, les résistances internes de tous les groupes d'éléments ont pratiquement la même valeur, et les courants absorbés par ces groupes d'éléments ont tous sensiblement la valeur I1.

Cette situation reste inchangée jusqu'à ce que l'une des tensions Ug1 à Ugn aux bornes des groupes d'éléments 2.1 à 2.n devienne supérieure à la valeur Ur définie ci-dessus.

A ce moment, qui marque la fin de la première étape et le début de la deuxième étape de la charge de l'accumulateur 2, le signal S16 prend son deuxième état, et le commutateur 17 prend l'état où son signal de sortie S17 est identique au signal R2 défini ci-dessus. Les tensions U13 et U14 deviennent donc constantes, cette dernière prenant la valeur k2.U1/n, et les tensions Ug1 à Ugn aux bornes de tous les groupes d'éléments 2.1 à 2.n deviennent sensiblement égales à la valeur U1/n.

Ces tensions Ug1 à Ugn ne sont pas rigoureusement égales à la valeur U1/n à cause, à nouveau, des différences entre les résistances internes de ces groupes d'éléments 2.1 à 2.n, qui ont comme conséquence que les courants absorbés par ces derniers sont différents les uns des autres et provoquent des chutes de tension différentes dans les divers circuits de charge 3.1 à 3.n.

Mais ces différences sont faibles et tendent à s'annuler car, à nouveau, les groupes d'éléments ayant les résistances internes les plus faibles absorbent plus de courant que les autres et se chargent plus rapidement que ces dernier. Leur résistance interne augmente donc plus rapidement que celle de ces autres éléments. Après un certain temps, toutes ces résistances internes deviennent sensiblement égales les unes aux autres, de même que les courants absorbés par les divers groupes d'éléments, et donc de même que les diverses tensions Ug1 à Ugn.

Pendant cette deuxième étape de la charge de l'accumulateur 2, les courants fournis par le chargeur 11 aux divers groupes d'éléments 2.1 à 2.n diminuent progressivement, indépendamment les uns des autres, jusqu'à devenir très faibles lorsque ces groupes d'éléments sont complètement chargés.

Le courant I14 fourni par le convertisseur 14 devient alors également très faible, de même bien entendu que le signal S14.

Le fait que la source commune à tous les circuits de charge 3.1 à 3.n comporte, comme cela vient d'être décrit, un redresseur 12, un régulateur 13 et un convertisseur 14, a notamment comme avantage que la fréquence de la tension fournie par cette source, c'est-à-dire la tension U14 dans l'exemple de la figure 2, est indépendante de la fréquence de la tension du réseau d'alimentation en énergie électrique auquel le chargeur est relié.

La fréquence de cette tension U14 peut donc être choisie librement, et notamment à la valeur pour laquelle le volume, et donc le prix, des transformateurs des circuits de charge 3.1 à 3.n est minimum.

Ce même fait permet en outre de concevoir le convertisseur 14 de manière que la tension U14 ne soit pas sinusoïdale mais qu'elle ait une forme sensiblement rectangulaire, ou au moins sensiblement trapézoïdale.

On sait en effet que lorsqu'une telle tension est appliquée à un circuit semblable aux circuits de charge 3.1 à 3.n, le courant absorbé par ce circuit a sensiblement la même forme et ne présente pas les pointes très élevées et assez courtes qu'il présente lorsque cette tension est sinusoïdale. Cette propriété permet de diminuer également les dimensions, et donc le prix, des redresseurs qui font partie des circuits de charge 3.1 à 3.n.

D'autre part, ce même fait permet également de concevoir le régulateur de tension 13 de manière que le courant alternatif fourni au chargeur 11 par le réseau d'alimentation en énergie électrique ait une forme sensiblement sinusoïdale, ce qui élimine, ou du moins diminue sensiblement, les perturbations qui, sans cela, seraient produites sur ce réseau par ce chargeur.

Les divers circuits formant le chargeur 11 ne seront pas décrits plus en détail car il s'agit de circuits bien connus dont la réalisation ne pose pas de problème particulier aux spécialistes.

Il est bien connu qu'il n'est pas non plus souhaitable de décharger un accumulateur au-dessous d'une certaine limite, qui dépend du type de cet accumulateur, sous peine, également, de risquer de l'endommager et de diminuer sa durée de vie.

Or, comme cela a déjà été mentionné, les divers éléments d'un accumulateur n'ont jamais tous la même capacité maximale. Il en découle que pendant qu'un accumulateur se décharge en fournissant de l'énergie électrique à un dispositif utilisateur, les capacités résiduelles de ses divers éléments ne sont jamais toutes les mêmes, et qu'il y a forcément un de ces éléments qui atteint la limite mentionnée ci-dessus, au-dessous de laquelle il ne devrait pas être déchargé, avant tous les autres. Pour éviter d'endommager cet élément, il faudrait interrompre la décharge de l'accumulateur à ce moment.

Mais, d'une part, il est difficile, voire même impossible, de détecter ce moment où la capacité résiduelle d'un élément a atteint sa valeur limite. D'autre part, si la décharge de l'accumulateur est interrompue à ce moment, la capacité résiduelle des autres éléments n'a pas encore atteint la valeur limite. Une partie non négligeable de l'énergie électrique emmagasinée dans l'accumulateur ne peut donc pas être utilisée, ce qui n'est pas rationnel.

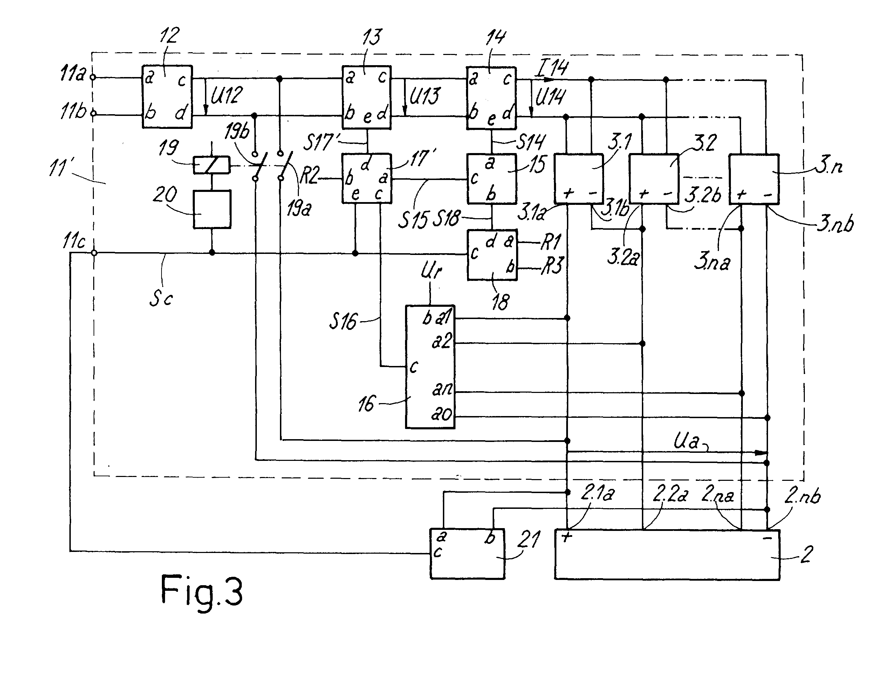

Comme cela sera décrit ci-dessous à l'aide de la figure 3, une des formes d'exécution du chargeur selon la présente invention permet d'éviter cet inconvénient en maintenant les capacités de tous les éléments de l'accumulateur à des valeurs sensiblement égales les unes aux autres pendant l'utilisation de cet accumulateur. Toute l'énergie électrique disponible dans cet accumulateur peut donc être utilisée, sans que la capacité de l'un de ses éléments risque d'atteindre, avant celle des autres éléments, la valeur limite au-dessous de laquelle cet élément risque d'être endommagé.

Dans sa forme d'exécution représentée à la figure 3, le chargeur selon la présente invention est désigné par la référence 11'.

Comme les chargeurs 1 et 11 de figures 1 et 2, le chargeur 11' est destiné à charger un accumulateur, également désigné par la référence 2, dont les éléments sont répartis en n groupes qui n'ont pas été représentés séparément mais qui seront cependant désignés par les mêmes références 2.1 à 2.n que dans la figure 1.

Toujours comme les chargeurs 1 et 11, le chargeur 11' comporte des circuits de charge distincts les uns des autres, également désignés par les références 3.1 à 3.n, qui sont reliés chacun à un des groupes d'éléments 2.1 à 2.n.

Le chargeur 11' comporte également un redresseur 12, un régulateur 13, un convertisseur 14, un intégrateur 15 et un comparateur 16 qui sont identiques aux circuits désignés par les mêmes références dans la figure 2 et qui ne seront donc pas décrits à nouveau ici.

A la place du commutateur 17 du chargeur 11, le chargeur 11' comporte un autre commutateur, désigné par la référence 17', qui a également deux entrées 17'a et 17'b reliées respectivement à la sortie 15c de l'intégrateur 15 et à la sortie de la source, également non représentée, fournissant le signal R2, et une sortie 17'd reliée à l'entrée de commande 13e du régulateur 13 et fournissant à cette dernière le signal de réglage de la tension U13, qui est désigné ici par la référence S17'.

Le commutateur 17' comporte encore deux entrées de commande 17'c et 17'e reliées respectivement à la sortie 16c du comparateur 16 et à une borne d'entrée supplémentaire 11c que comporte le chargeur 11', cette borne 11c étant destinée à recevoir, d'une manière qui sera décrite plus loin, un signal Sc pouvant prendre un premier ou un deuxième état.

Le commutateur 17' est agencé de manière à produire le signal S17' de la manière suivante :

- lorsque les signaux S16 et Sc sont tous deux dans leur premier état, le signal S17' est identique au signal S15;
- lorsque le signal Sc est dans son premier état et que le signal S16 est dans son deuxième état, le signal S17' est identique au signal de référence R2;
- lorsque le signal Sc est dans son deuxième état, le signal S17' est identique au signal S15, indépendamment de l'état du signal S16.

Le chargeur 11' comporte également un commutateur 18 ayant deux entrées 18a et 18b reliées respectivement à des sources, non représentées, dont la première fournit un signal de référence identique au signal R1 décrit ci-dessus et désigné par la même référence, et dont la deuxième fournit un autre signal de référence, désigné par R3, dont la valeur, pour une raison qui sera rendue évidente par la suite de cette description, est égale au quotient de celle du signal R1 par un facteur f fixe et prédéterminé.

Le commutateur 18 comporte aussi une entrée de commande 18c reliée à la borne d'entrée 11c du chargeur 11', et il est agencé de manière à fournir à sa sortie 18d un signal S18 identique au signal R1 ou au signal R3 selon que le signal Sc appliqué à cette borne 11c d'une manière qui sera décrite plus loin est dans son premier ou son deuxième état.

Le chargeur 11' comporte encore un relais électromagnétique 19 ayant deux contacts 19a et 19b. Le contact 19a est branché en série entre la borne positive 2.1a de l'accumulateur 2 et la sortie positive 12c du redresseur 12, qui est elle-même reliée à l'entrée 13a du régulateur de tension 13, et le contact 19b est branché en série entre la borne négative 2.nb de l'accumulateur 2 et la sortie négative 12d du redresseur 12, qui est elle-même reliée à l'entrée 13b du régulateur de tension 13.

La bobine du relais 19 est reliée à la sortie d'un amplificateur 20 dont l'entrée est reliée à la borne d'entrée 11c du chargeur 11 et qui est agencé de manière que les contacts 19a et 19b du relais 19 sont ouverts, comme cela a été représenté, ou fermés selon que le signal Sc est dans son premier ou son deuxième état.

Le dispositif alimenté par l'accumulateur 1 a également été représenté schématiquement dans cette figure 3, avec la référence 21.

Ce dispositif 21 peut être l'un quelconque des nombreux dispositifs qui doivent être alimentés par un accumulateur tel que l'accumulateur 2. A titre d'exemple non limitatif, un tel dispositif peut être constitué par un ou plusieurs moteurs électriques associés à un circuit de commande adéquat et entraînant une ou plusieurs roues motrices d'un véhicule automobile.

Quelle que soit sa nature, le dispositif 21 comporte évidemment deux bornes d'alimentation 21a et 21b reliées respectivement à la borne positive 2.1a et à la borne négative 2.nb de l'accumulateur 2, ainsi que des moyens, non représentés, qui permettent de le mettre en ou hors service.

Le signal Sc mentionné ci-dessus est fourni par une sortie 21c du dispositif 21, qui est reliée à l'entrée 11c du chargeur 11', et ce dispositif 21 est agencé de manière que, selon qu'il est hors service ou en service, ce signal Sc est respectivement dans son premier et dans son deuxième état.

Comme cela sera décrit en détail plus loin, le chargeur 11' peut fonctionner dans deux modes différents.

Le premier de ces modes est utilisé lorsque le dispositif 21 est hors service et que les bornes 11a et 11b du chargeur 11' sont reliées à un réseau de distribution d'énergie électrique.

Le signal Sc est donc dans son premier état, de sorte que le signal S18 est identique au signal de référence R1, que le signal S17' est identique au signal S16, et que les contacts 19a et 19b du relais 19 sont ouverts.

Le fonctionnement du chargeur 11' est alors identique à celui du chargeur 11 de la figure 2 et ne sera donc pas décrit à nouveau ici.

Le deuxième mode de fonctionnement du chargeur 11' est utilisé lorsque ses bornes 11a et 11b ne sont pas reliées à un réseau de distribution d'énergie électrique, et que le dispositif 21 est en service. L'accumulateur 2 fournit alors un certain courant à ce dispositif 21, et la capacité de ses divers groupes d'éléments décroît.

Le signal Sc est alors dans son deuxième état, ce qui a comme conséquence que les contacts 19a et 19b du relais 19 sont tous deux fermés, et que c'est maintenant la tension Ua présente entre la borne positive 2.1a et la borne négative 2.nb de l'accumulateur 2 qui est appliquée aux entrées 13a et 13b du régulateur de tension 13.

En outre, le commutateur 17' est dans l'état où son signal de sortie S17' est identique au signal S15. Comme le commutateur 18 est maintenant dans l'état où son signal de sortie S18 est identique au signal de référence R3, ce signal S15 est maintenant égal à l'intégrale en fonction du temps de la différence entre ce signal R3 et le signal S14.

Le fonctionnement du chargeur 11' dans ce deuxième mode est analogue à celui du chargeur 11 de la figure 2 de l'accumulateur 2, qui a été décrit ci-dessus.

Mais, dans ce deuxième mode, le régulateur 13 produit la tension U13 à partir de la tension Ua présente aux bornes de l'accumulateur 2.

En outre, la valeur du signal S17', dont dépendent la valeur de la tension U13, celle de la tension U14 et l'intensité du courant I14, est maintenant égale à l'intégrale en fonction du temps de la différence entre les valeurs des signaux R3 et S14. La valeur de ce signal R3 étant égale au quotient de celle du signal R1 par le facteur f mentionné ci-dessus, l'intensité du courant I14 est maintenant réglée à une valeur qui est égale à $k1.n.I1/f$, $k1.n.I1$ étant la valeur de l'intensité de ce courant I14 pendant la première étape de la charge de l'accumulateur 2 lorsque le chargeur 11 fonctionne dans son premier mode.

Chacun des circuits de charge 3.1 à 3.n fournit donc au groupe d'éléments 2.1 à 2.n qui lui est relié un courant, qui sera appelé courant de compensation, circulant dans ce groupe d'éléments en sens inverse du courant fourni par l'accumulateur 2 au dispositif 21 et ayant donc pour effet de diminuer la vitesse de décroissance de la capacité du groupe d'éléments 2.1 à 2.n qu'il traverse, cette décroissance étant évidemment due au fait que l'accumulateur 2 fournit l'énergie électrique nécessaire au fonctionnement du dispositif 21.

La somme des intensités de ces courants de compensation est évidemment égale à $n.I1/f$, mais ces intensités peuvent être différentes les unes des autres puisque les capacités des groupes d'éléments 2.1 à 2.n, et donc leurs résistances internes, peuvent être également différentes les unes des autres.

Ces différences ont cependant tendance à s'atténuer au fur et à mesure que l'accumulateur 2 se décharge, par le fait que les courants de compensation ayant l'intensité la plus grande sont justement ceux qui traversent les groupes d'éléments ayant les résistances internes, et donc les capacités, les plus faibles.

La vitesse de décroissance de la capacité de ces groupes d'éléments est donc plus fortement diminuée que celle des autres groupes d'éléments, de sorte que, après un certain temps, les capacités de tous les groupes d'éléments deviennent sensiblement égales, de même que les vitesses de décroissance de ces capacités. Les intensités des divers courants de compensation deviennent alors aussi sensiblement égales les unes aux autres et donc, chacune, à la valeur $I1/f$.

La valeur du facteur f peut être choisie très librement. Des essais ont montré que l'on obtient de bons résultats lorsque le courant de compensation a une intensité comprise entre 1/50e et 1/5e de l'intensité du courant que l'accumulateur peut théoriquement fournir pendant une heure. Ainsi, par exemple, pour un accumulateur ayant une capacité nominale de 200 Ampères. heures, l'intensité du courant de compensation peut être comprise entre 1/50e et 1/5e de 200 Ampères, soit entre 4 Ampères et 40 Ampères.

Comme cela a été mentionné ci-dessus, l'intensité I1 du courant fourni à l'accumulateur pendant la première étape de sa charge est choisie de manière qu'elle soit égale au rapport entre la capacité nominale de cet accumulateur, exprimée en Ampères.heures, et le temps admissible pour le charger, exprimé en heures.

Il en découle que, pour que le courant de compensation ait l'intensité mentionnée ci-dessus, il faut que le facteur f soit compris entre 1/50e et 1/5e du nombre d'heures de ce temps admissible.

Ainsi, dans le cas ci-dessus d'un accumulateur ayant une capacité nominale de 200 Ampères.heures, si le temps admissible pour charger cet accumulateur est de 10 heures, auquel cas l'intensité I1 est choisie à 20 Ampères, la valeur du facteur f peut être comprise entre 1/50e et 1/5e de 10 soit, entre 0,2 et 2, ce qui donne bien pour le courant de compensation une intensité comprise entre 4 Ampères et 40 Ampères.

On voit que, lorsqu'il fonctionne dans ce deuxième mode, le chargeur 11' prélève une partie de l'énergie emmagasinée dans l'accumulateur 2 et la restitue aux divers groupes d'éléments 2.1 à 2.n en la répartissant entre ces derniers de manière que leurs capacités tendent à devenir égales les unes aux autres, de même que les vitesses de décroissance de ces capacités.

Il en résulte une très forte diminution du risque que la capacité de l'un des groupes d'éléments 2.1 à 2.n atteigne, nettement avant celle des autres de ces groupes d'éléments, la valeur minimale en dessous de laquelle ce groupe d'éléments ne devrait pas être déchargé sous peine d'être endommagé. Il est donc possible d'utiliser pratiquement toute l'énergie électrique disponible dans l'accumulateur 2 sans risquer d'endommager celui-ci.

De nombreuses modifications peuvent être apportées au chargeur selon la présente invention sans pour autant sortir du cadre de cette dernière.

Parmi ces modifications, qui ne peuvent évidemment pas être toutes décrites ici, on mentionnera simplement celle qui consiste à prévoir un ou plusieurs capteurs de mesure de la température de l'accumulateur 2, et des moyens qui répondent à cette mesure pour modifier la valeur de la tension Ur et celle du signal R2 en fonction de cette température de manière que, quelle que soit cette dernière, l'accumulateur 2 puisse être chargé jusqu'à sa capacité maximale sans pour autant risquer d'être endommagé.

On mentionnera également celle qui consiste à munir le chargeur selon l'invention de moyens agencés de manière à interrompre son fonctionnement lorsque, à la fin de la charge de l'accumulateur, l'intensité du courant fourni par la source 6 (figure 1) ou le convertisseur 14 (figures 2 et 3) devient inférieure à une valeur prédéterminée.

Un véhicule dont la ou les roues motrices sont entraînées par un ou plusieurs moteurs électriques alimentés en énergie par un accumulateur, qui est alors appelé accumulateur de traction, comporte généralement un autre accumulateur, appelé accumulateur de bord, qui est destiné à alimenter tous les circuits auxiliaires de ce véhicule, tels que ses phares, ses feux de freinage, les instruments de son tableau de bord, etc. Ce véhicule comporte également un chargeur de cet accumulateur de bord.

Il est évident que, lorsqu'un tel véhicule est équipé d'un chargeur selon la présente invention pour charger son accumulateur de traction, on peut avantageusement prévoir un transformateur à l'entrée du chargeur de son accumulateur de bord et relier l'enroulement primaire de ce transformateur à la source, telle la source 6 de la figure 1, en parallèle avec les enroulements primaires des transformateurs faisant partie des circuits de charge tels que les circuits 3.1 à 3.n de la même figure 1.

## Revendications

1. Appareil pour charger un accumulateur d'énergie électrique rechargeable (2) comprenant une pluralité de groupes d'éléments (2.1 à 2.n) ayant chacun au moins un élément, ledit appareil comportant :

   - une source (6; 12 à 17; 12 à 18) produisant une première tension alternative (U6; U14);
   - une pluralité de redresseurs (5.1 à 5.n) ayant chacun des sorties destinées à être reliées à l'un desdits groupes d'éléments (2.1 à 2.n);
   - une pluralité de transformateurs (4.1 à 4.n) distincts les uns des autres, reliés chacun à un redresseur respectif (5.1 à 5.n) et comprenant chacun un enroulement primaire relié à ladite source (6; 12 à 17; 12 à 18) pour recevoir ladite première tension alternative (U6; U14) et un enroulement secondaire relié aux entrées du redresseur respectif (5.1 à 5.n),

   caractérisé par le fait que

   - ladite première tension alternative (U6; U14) a une fréquence supérieure ou égale à 10kHz.
   - ledit accumulateur comporte un grand nombre d'éléments branchés en série pour fournir une tension totale élevée capable d'alimenter au moins un moteur électrique d'entraînement d'un véhicule,

   - chaque groupe d'éléments comporte un nombre d'éléments limité pour diminuer sensiblement le risque d'endommager ledit accumulateur pendant sa charge si un de ses éléments a une capacité maximale inférieure à celle des autres éléments du groupe,
   - ladite source est agencée de manière que lorsque la tension (Ug1 à Ugn) aux bornes de chacun desdits groupes d'éléments (2.1 à 2.n) est inférieure à une tension de référence prédéterminée (Ur), ladite première tension alternative (U14) a une valeur variable telle que le courant (I14) fourni auxdits enroulements primaires a une intensité sensiblement constante, et que lorsque la tension (Ug1 à Ugn) aux bornes de l'un quelconque desdits groupes d'éléments (2.1 à 2.n) devient supérieure à ladite tension de référence (Ur), ladite première tension alternative (U14) a une valeur fixe telle que la tension appliquée à chacun desdits groupes d'éléments (2.1 à 2.n) est sensiblement égale à ladite tension de référence (Ur).

2. Appareil selon la revendication 1, caractérisé par le fait que ladite source (12 à 17; 12 à 18) comporte :

   - des moyens redresseurs (12) pour fournir une tension redressée (U12) à partir d'une deuxième tension alternative;
   - des moyens régulateurs (13) pour fournir, à partir de ladite tension redressée (U12), une tension continue (U13) ayant une valeur dépendant de la valeur d'un signal de réglage (S17; S17');
   - des moyens convertisseurs (14) pour fournir ladite première tension alternative (U14) à partir de ladite tension continue (U13) et pour fournir un signal de mesure (S14) ayant une valeur dépendant de l'intensité du courant (I14) absorbé par lesdits circuits de charge (3.1 à 3.n) en réponse à ladite première tension alternative (U14);
   - des moyens (15) pour fournir un signal d'intégration (S15) ayant une valeur égale à l'intégrale en fonction du temps de la différence entre la valeur d'un premier signal de référence (R1) et la valeur dudit signal de mesure (S14), la valeur de ce premier signal de référence (R1) étant égale à la valeur dudit signal de mesure (S14) lorsque ledit courant (I14) a ladite intensité sensiblement constante; et
   - des moyens (16, 17; 16, 17') pour produire ledit signal de réglage (S17; S17') avec une valeur égale à la valeur dudit signal d'intégration (S15) lorsque la tension (Ug1 à Ugn) aux bornes de chacun desdits groupes d'éléments (2.1 à 2.n) est inférieure à ladite tension de référence (Ur) et avec une valeur égale à la valeur d'un deuxième signal de référence (R2) lorsque la tension (Ug1 à Ugn) aux bornes de l'un quelconque desdits groupes d'éléments (2.1 à 2.n) est supérieure à ladite tension de référence (Ur) .

3. Appareil selon la revendication 1, caractérisé par le fait que ladite source (12 à 18) comporte :

- des moyens redresseurs (12) ayant des sorties (12c, 12d) et agencés de manière à fournir entre lesdites sorties (12c, 12d) une tension redressée (U12) à partir d'une deuxième tension alternative;
- des moyens régulateurs (13) ayant des entrées (13a, 13b) reliées auxdites sorties (12c, 12d) desdits moyens redresseurs (12) et agencés de manière à fournir une tension continue (U13) ayant une valeur dépendant de la valeur d'un signal de réglage (S17');
- des moyens convertisseurs (14) pour fournir ladite première tension alternative (U14) à partir de ladite tension continue (U13) et pour fournir un signal de mesure (S14) ayant une valeur dépendant de l'intensité du courant (I14) absorbé par lesdits circuits de charge en réponse à ladite première tension alternative (U14);
- des moyens (18) pour produire un premier signal de référence (S18) avec une première (R1) ou une deuxième valeur (R2) en réponse à un premier ou, respectivement, un deuxième état d'un signal de commande (Sc), ladite première valeur (R1) étant égale à la valeur dudit signal de mesure (S14) lorsque ledit courant (I14) a ladite intensité sensiblement constante et ladite deuxième valeur (R2) étant égale à une fraction de ladite première valeur (R1);
- des moyens (15) pour fournir un signal d'intégration (S15) ayant une valeur égale à l'intégrale en fonction du temps de la différence entre la valeur dudit signal de référence (S18) et la valeur dudit signal de mesure (S14); et
- des moyens (17) répondant audit premier état dudit signal de commande (Sc) pour produire ledit signal de réglage (S17') avec une valeur egale à la valeur dudit signal d'intégration (S15) lorsque la tension (Ug1 à Ugn) aux bornes de chacun desdits groupes d'éléments (2.1 à 2.n) est inférieure à ladite tension de référence (Ur) et avec une valeur égale à la valeur d'un deuxième signal de référence (R2) lorsque la tension (Ug1 à Ugn) aux bornes de l'un quelconque desdits groupes d'éléments (2.1 à 2.n) est supérieure à ladite tension de référence (Ur), et répondant audit deuxième état dudit signal de commande (Sc) pour produire ledit signal de réglage (S17') avec une valeur égale à la valeur dudit signal d'intégration (S15) indépendamment de la tension (Ug1 à Ugn) aux bornes desdits groupes d'éléments (2.1 à 2.n);

et par le fait que ledit appareil comporte en outre des moyens (19, 20) répondant audit deuxième état dudit signal de commande (Sc) pour appliquer la tension (Ua) produite par ledit accumulateur (2) auxdites entrées (13a, 13b) desdits moyens régulateurs (13).

**Patentansprüche**

1. Gerät zum Laden eines wiederaufladbaren Akkumulators (2) für elektrische Energie, der mehrere Elementgruppen (2.1 bis 2.n) umfaßt, wovon jede wenigstens ein Element besitzt, wobei die Vorrichtung enthält:

- eine Quelle (6; 12 bis 17; 12 bis 18), die eine erste Wechselspannung erzeugt (U6; U14);
- eine Vielzahl von Gleichrichtern (5.1 bis 5.n), die jeweils Ausgänge besitzen, die dazu vorgesehen sind, mit einer der Elementgruppen (2.1 bis 2.n) verbunden zu werden;
- eine Vielzahl von Transformatoren (4.1 bis 4.n), die voneinander verschieden sind, jeweils mit einem entsprechenden Gleichrichter (5.1 bis 5.n) verbunden sind und jeweils eine mit der Quelle (6; 12 bis 17; 12 bis 18) verbundene Primärwicklung zum Aufnehmen der ersten Wechselspannung (U6; U14) sowie eine mit den Eingängen des entsprechenden Gleichrichters (5.1 bis 5.n) verbundene Sekundärwicklung umfassen,

dadurch gekennzeichnet, daß

- die erste Wechselspannung (U6; U14) eine Frequenz besitzt, die größer oder gleich 10 kHz ist,
- der Akkumulator eine große Anzahl von in Serie geschalteten Elementen enthält, um eine hohe Gesamtspannung zu liefern, die wenigstens einen Elektromotor für den Antrieb eines Fahrzeugs speisen kann,
- jede Elementgruppe eine begrenzte Anzahl von Elementen enthält, um die Gefahr einer Beschädigung des Akkumulators während seines Ladens wesentlich zu vermindern, falls eines ihrer Elemente eine maximale Kapazität besitzt, die kleiner als jene der anderen Elemente der Gruppe ist,
- die Quelle so beschaffen ist, daß die erste Wechselspannung (U14) dann, wenn die Spannung (Ug1 bis Ugn) an den Anschlüssen jeder der Elementgruppen (2.1 bis 2.n) niedriger als eine vorgegebene Referenzspannung (Ur) ist, einen veränderlichen Wert hat, derart, daß der an die Primärwicklungen gelieferte Strom (I14) eine im wesentlichen konstante Stärke besitzt, und daß die erste Wechselspannung (U14) dann, wenn die Spannung (Ug1 bis Ugn) an den Anschlüssen irgendeiner der Elementgruppen (2.1 bis 2.n) größer als die Referenzspannung (Ur) wird, einen festen Wert hat, derart, daß die an jede der Elementgruppen (2.1 bis 2.n) angelegte Spannung im wesentlichen gleich der Referenzspannung (Ur) ist.

2. Gerät nach Anspruch 1, dadurch gekennzeichnet, daß die Quelle (12 bis 17; 12 bis 18) enthält:

- Gleichrichtermittel (12) zum Liefern einer gleichgerichteten Spannung (U12) anhand einer zweiten Wechselspannung;
- Regelungsmittel (13) zum Liefern einer Gleichspannung (U13) mit einem vom Wert eines Regelungssignals (S17; S17') abhängigen Wert anhand der gleichgerichteten Spannung (U12);
- Umsetzungsmittel (14) zum Liefern der ersten Wechselspannung (U14) anhand der Gleichspannung (U13) und zum Liefern eines Meßsignals (S14) mit einem Wert, der von der Stärke des von den Ladeschaltungen (3.1 bis 3.n) absorbierten Stroms (I14) abhängt, als Antwort auf die erste Wechselspannung (U14);
- Mittel (15) zum Liefern eines Integrationssignals (S15) mit einem Wert, der gleich dem Integral über die Zeit der Differenz zwischen dem Wert eines ersten Referenzsignals (R1) und dem Wert des Meßsignals (S14) ist, wobei der Wert dieses ersten Referenzsignals (R1) gleich dem Wert des Meßsignals (S14) ist, wenn der Strom (I14) die im wesentlichen konstante Stärke besitzt; und
- Mittel (16, 17; 16, 17') zum Erzeugen des Regelungssignals (S17; S17') mit einem Wert, der gleich dem Wert des Integrationssignals (S15) ist, wenn die Spannung (Ug1 bis Ugn) an den Anschlüssen jeder der Elementgruppen (2.1 bis 2.n) niedriger als die Referenzspannung (Ur) ist, und mit einem Wert, der gleich dem Wert eines zweiten Referenzsignals (R2) ist, wenn die Spannung (Ugl bis Ugn) an den Anschlüssen irgendeiner der Elementgruppen (2.1 bis 2.n) größer als die Referenzspannung (Ur) ist.

3. Gerät nach Anspruch 1, dadurch gekennzeichnet, daß die Quelle (12 bis 18) enthält:

- Gleichrichtermittel (12), die Ausgänge (12c, 12d) besitzen und so beschaffen sind, daß sie zwischen den Ausgängen (12c, 12d) anhand einer zweiten Wechselspannung eine gleichgerichtete Spannung (U12) liefern;
- Regelungsmittel (13), die Eingänge (13a, 13b), die mit den Ausgängen (12c, 12d) der Gleichrichtermittel (12) verbunden sind, besitzen und so beschaffen sind, daß sie eine Gleichspannung (U13) mit einem vom Wert eines Regelungssignals (S17') abhängigen Wert liefern;
- Umsetzungsmittel (14) zum Liefern der ersten Wechselspannung (U14) anhand der Gleichspannung (U13) und zum Liefern eines Meßsignals (S14) mit einem Wert, der von der Stärke des von den Ladeschaltungen absorbierten Stroms (I14) abhängt, als Antwort auf die erste Wechselspannung (U14);
- Mittel (18) zum Erzeugen eines ersten Referenzsignals (S18) mit einem ersten (R1) oder einem zweiten Wert (R2) als Antwort auf einen ersten bzw. auf einen zweiten Zustand eines Steuersignals (Sc), wobei der erste Wert (R1) gleich dem Wert des Meßsignals (S14) ist, wenn der Strom (I14) die im wesentlichen konstante Stärke hat, und der zweite Wert (R2) gleich einem Bruchteil dieses ersten Wertes (R1) ist;
- Mittel (15) zum Liefern eines Integrationssignals (S15) mit einem Wert, der gleich dem Integral über die Zeit der Differenz zwischen dem Wert des Referenzsignals (S18) und dem Wert des Meßsignals (S14) ist; und
- Mittel (17), die auf den ersten Zustand des Steuersignals (Sc) antworten, um das Regelungssignal (S17') mit einem Wert zu erzeugen, der gleich dem Wert des Integrationssignals (S15) ist, wenn die Spannung (Ug1 bis Ugn) an den Anschlüssen jeder der Elementgruppen (2.1 bis 2.n) niedriger als die Referenzspannung (Ur) ist, und mit einem Wert, der gleich dem Wert des zweiten Referenzsignals (R2) ist, wenn die Spannung (Ug1 bis Ugn) an den Anschlüssen irgendeiner der Elementgruppen (2.1 bis 2.n) größer als die Referenzspannung (Ur) ist, und auf den zweiten Zustand des Steuersignals (Sc) antworten, um das Regelungssignal (S17') mit einem Wert zu erzeugen, der unabhängig von der Spannung (Ug1 bis Ugn) an den Anschlüssen der Elementgruppen (2.1 bis 2.n) gleich dem Wert des Integrationssignals (S15) ist;

und durch die Tatsache, daß die Vorrichtung außerdem Mittel (19, 20) enthält, die auf den zweiten Zustand des Steuersignals (Sc) antworten, um die vom Akkumulator (2) erzeugte Spannung (Ua) an die Eingänge (13a, 13b) der Regelungsmittel (13) anzulegen.

## Claims

1. Apparatus for charging a rechargeable electrical energy accumulator (2) comprising a plurality of groups of cells (2.1 to 2.n) each comprising at least one cell, said apparatus comprising :

   - a source (6; 12 to 17; 12 to 18) producing a first a.c. voltage (U6; U14);
   - a plurality of rectifiers (5.1 to 5.n) each having outputs intended to be connected to one of said groups of cells (2.1 to 2.n);
   - a plurality of transformers (4.1 to 4.n) distinct from each other, each connected to a respective rectifier (5.1 to 5.n) and each comprising a primary winding connected to said source (6; 12 to 17; 12 to 18) for receiving said first a.c. voltage (U6; U14) and a secondary winding connected to inputs of the respective rectifier (5.1 to 5.n);

   characterized by the fact that

   - said first a.c. voltage (U6; U14) has a frequency greater than or equal to 10kHz;
   - said accumulator comprises a great number of cells connected in series for delivering a total high voltage capable of supplying at least one electric drive motor of a vehicle;
   - each group of cells comprises a limited number of cells for substantially limiting the risk of damaging said accumulator during its charging if one of its cells has a maximal capacity less than that of the other cells of the group;
   - said source is arranged in a manner that, when the voltage (Ug1 to Ugn) across the terminals of each of said groups of cells (2.1 to 2.n) is less than a predetermined reference voltage (Ur), said first a.c. voltage (U14) has a variable value such that a current (I14) supplied to said primary windings has a substantially constant magnitude, and that, when the tension (Ug1 to Ugn) across the terminals of any one of said groups of cells (2.1 to 2.n) is greater than said reference voltage (Ur), said first a.c. voltage (U14) has a fixed value such that the voltage applied to each of said groups of cells (2.1 to 2.n) is substantially equal to said reference voltage (Ur).

2. Apparatus according to claim 1, characterized by the fact that said source (12 to 17; 12 to 18) comprises :

   - rectifier means (12) for supplying a rectified voltage (U12) from a second a.c. voltage;
   - regulator means (13) for supplying, from said rectified voltage (U12), a d.c. voltage (U13) having a value depending on the value of a regulation signal (S17; S17');
   - converter means (14) for supplying said first a. c. voltage (U14) from said d.c. voltage (U13) and for supplying a measuring signal (S14) having a value depending on the magnitude of the current (I14) absorbed by said charging circuits (3.1 to 3.n) in response to said first a.c. voltage (U14);
   - means (15) for supplying an integration signal (S15) having a value equal to the integral in dependence of time of the difference between the value of a first reference signal (R1) and the value of said measuring signal (S14), the value of this first reference signal (R1) being equal to the value of said measuring signal (S14) when said current (I14) has said substantially constant magnitude; and
   - means (16, 17; 16, 17') for producing said regulation signal (S17; S17') with a value equal to the value of said integration signal (S15) when the voltage (Ug1 to Ugn) across the terminals of each of said groups of cells (2.1 to 2.n) is less than said reference voltage (Ur) and with a value equal to the value of a second reference signal (R2) when the voltage (Ug1 to Ugn) across the terminals of any one of said groups of cells (2.1 to 2.n) is greater than said reference voltage (Ur).

3. Apparatus according to claim 1, characterized by the fact that said source (12 to 18) comprises :

   - rectifier means (12) having outputs (12c, 12d) and arranged in a manner to supply between said outputs (12c, 12d) a rectified voltage (U12) from a second a.c. voltage;
   - regulator means (13) having inputs (13a, 13b) connected to said outputs (12c, 12d) of said rectifier means (12) and arranged in a manner to supply a d.c. voltage (U13) having a value depending on the value of a regulation signal (S17');
   - converter means (14) for supplying said first a. c. voltage (U14) from said d.c. voltage (U13) and for supplying a measuring signal (S14) having a value depending on the magnitude of the current (I14) absorbed by said charging circuits in response to said first a.c. voltage (U14);
   - means (18) for producing a first reference signal (S18) with a first value (R1) or a second value (R2) in response respectively to a first or to a second state of a control signal (Sc), said first value (R1) being equal to the value of said measuring signal (S14) when said current (I14) has said substantially constant magnitude and said second value (R2) being equal to a fraction of the first value (R1);

- means (15) for supplying an integration signal (S15) having a value equal to the integral in dependence of time of the difference between the value of said reference signal (S18) and the value of said measuring signal (S14); and
- means (17) responsive to said first state of said control signal (Sc) for producing said regulation signal (S17') with a value equal to the value of said integration signal (S15) when the voltage (Ug1 to Ugn) across the terminals of each of said groups of cells (2.1 to 2.n) is less than said reference voltage (Ur) and with a value equal to the value of a second reference signal (R2) when the voltage (Ug1 to Ugn) across the terminals of any one of said groups of cells (2.1 to 2.n) is greater than said reference voltage (Ur), and responsive to said second state of said control signal (Sc) for producing said regulation signal (S17') with a value equal to the value of said integration signal (S15) independently of the voltage (Ug1 to Ugn) across the terminals of said groups of cells (2.1 to 2.n);

and by the fact that said apparatus further comprises means (19, 20) responsive to said second state of said control signal (Sc) for applying the voltage (Ua) produced by said accumulator (2) to said inputs (13a, 13b) of said regulator means (13).

Fig.1

Fig.2

Fig.3

EP 0 573 832 B1